# EUROPEAN PATENT SPECIFICATION

(11) **EP 3 052 446 B1**
(45) Date of publication and mention of the grant of the patent: **27.01.2021**
(21) Application number: 14777326.1
(22) Date of filing: 30.09.2014
(51) Int. Cl.: C02F 3/00, C02F 3/12, C02F 3/30

(54) **PLANT AND METHOD FOR TREATMENT OF WASTE WATER IN AN ACTIVATED SLUDGE PLANT**
ANLAGE UND STEUERUNGSVERFAHREN ZUR BEHANDLUNG VON ABWASSER IN EINER BELEBTSCHLAMMANLAGE
INSTALLATION ET PROCÉDÉ DE CONTRÔLE D'UN TRAITEMENT D'EAUX USÉES DANS UNE INSTALLATION DE BOUES ACTIVÉES

(30) Priority: 30.09.2013 EP 13186647
(43) Date of publication of application: 10.08.2016
(73) Proprietor: Krüger A/S, 2860 Søborg (DK)
(72) Inventor: LARSEN, Thomas Krahl, DK-2720 Vanløse (DK); PEDERSEN, Jan, DK-1955 Frederiksberg C (DK); THOMSEN, Henrik Andreas Rønnow, DK-2100 Copenhagen Ø (DK)
(74) Representative: Inspicos P/S
(86) International application number: PCT/EP2014/070872
(87) International publication number: WO 2015/044440

(56) References cited:
- EP-A2- 2 426 090
- WO-A1-93/17974
- DE-A1- 2 304 804
- US-A- 5 332 502
- US-A- 5 795 481

## Description

### Field of the invention

The present invention relates to a method for treatment of waste water in an activated sludge plant, wherein the plant comprises a plurality of process tanks comprising activated sludge with a treatment rate being variable. Each process tank has an inlet for receiving waste water and an outlet for supplying treated water to at least one clarification tank for separation into a water fraction and a sludge fraction.

### Background of the invention

Traditionally, waste water is subjected to biological treatment in an activated sludge plant by passing it through at least one process tank and subsequently passing it through at least one clarification tank for separation into a water fraction and a sludge fraction.

In the process tank micro-organisms metabolize the suspended and soluble organic matter contained in the waste water. Furthermore, nitrification, de-nitrification, and biological removal of phosphate may take place. The process tanks traditionally include a system for aeration of the tank, as the micro-organisms need oxygen for the biological treatment of the waste water. The rate and efficiency of the treatment in the process tank is proportional with the amount of micro-organisms, and it is thus important that the micro-organisms are present in the process tanks in a sufficient amount.

In order to cope with the varying amount of waste water the plants are traditionally dimensioned so that they in the majority part of time are only exposed to a low percentage of the amount of waste water for which the plant is dimensioned.

As the micro-organisms need waste water to grow, the waste water is traditionally distributed between all the process tanks to ensure sufficient feeding of the micro-organisms. However, this is not efficient in periods with low load, and consequently the cost of operation will increase significantly compared to the amount of waste water treated.

Prior art document DE 23 04 804 discloses a sewage plant, using activated sludge, preventing long running below capacity and producing effluent superior in quality to that permitted by the authorities, so that economic and technically efficient operation is ensured. The treatment stage(s) is divided into a number of separate units which can be used as required, depending upon the rates of inflow and concentration of the sewage water as measured in the inlet.

WO 93/17974 discloses an effluent treatment system, where effluent to be treated passes initially through a primary stage in which it undergoes primary settlement and anaerobic treatment. The substantially liquid effluent is withdrawn from the primary stage by means of a balanced flow arrangement to provide a uniform rate of withdrawal of effluent from the stage for downstream treatment in subsequent stages of the system. Secondary treatment consists of a succession of aerobic treatment stages. At least one nitrification sub-stage and a de-nitrification sub-stage are provided during secondary treatment. The effluent then passes to clarification and settlement stage before entering a disinfection stage by way of a filter.

US 5,795,481 discloses a process for the treatment of aqueous effluent with a view to its purification, the process including at least one stage consisting of causing the water to pass into the interior of at least one battery of several biological filters with fixed cultures or other devices with fixed cultures operating in parallel, characterized in that it comprises supplying the filters at constant flow and to cause the number of filters supplied and the number of filters not supplied in the battery, to be varied, in accordance with the total flow of aqueous effluent to be treated.

US 5,332,502 discloses a method for efficiently treating wastewater by aerobic digestion whereby on-site oxygen generating equipment continually provides a predetermined quantity of dissolved oxygen to the wastewater, the dissolved oxygen content being maintained at a predetermined level during peak flows by air being dissolved into the wastewater.

EP 2 426 090 discloses a batch-wise wastewater treatment method, which comprises: (a) supplying wastewater into a aeration reactor; (b) aerating the activated sludge reactor contents; (c) stopping the aeration and dropping the sludge; and (d) withdrawing clear water and additionally at least a part of the settled sludge, where the dry substance content of activated sludge contained in the aeration reactor is determined. The ammonium concentration of the supplied wastewater per reactor filling is monitored.

### Description of the invention

It is an object of embodiments of the invention to provide an improved method for treatment of waste water in an activated sludge plant.

It is a further object of embodiments of the invention to provide a treatment method being dynamically adaptable to the actual treatment rate of the activated sludge.

It is an even further object of embodiments of the invention to provide a treatment method which reduces the running cost for an activated sludge plant.

According to a first aspect, the invention provides a method for treatment of waste water in an activated sludge plant according to claim 1.

The process tanks may have different treatment zones where different processes are performed. As an example, aeration may take place only in a part of a process tank, thereby defining an aeration zone. Likewise stirring may take place in a stirring zone. It should however be understood, that a process tank may form one single zone.

Each process tank has an outlet for supplying treated water to at least one clarification tank. In one embodiment, the outlet of a process tank is connected to an inlet of an interrelated clarification tank. In an alternative embodiment, the outlets from the process tanks are connected and subsequently the treated water is supplied to one single clarification tank or supplied to a plurality of clarification tanks.

The treatment rate of the activated sludge may depend on different parameters, such as the actual performance of the sludge, including the actual metabolism rate of the biomass/micro-organisms, the amount of biomass/micro-organisms, and the organic matter/load composition contained in the waste water. As the biomass/micro-organisms are sensitive to temperature, the actual spare capacity may as an example be higher during summer than during winter.

The load rate is determined as the actual load relative to the capacity. The actual spare capacity may be determined based on one or more measurements and/or forecast(s) being indicative for the actual spare capacity.

The activated sludge plant is operated so that waste water is supplied only to a first group of process tanks and so that supply to a second group of process tanks is interrupted. The first group of process tanks is a subset of the plurality of process tanks. The number of process tanks in the first group is determined based on the actual spare capacity.

Dependent on the size of the plant, the number of process tanks in the first and second groups may be 1, 2, 3, ... , 7, 8, or even more. Dependent on the actual spare capacity, the number of process tanks in the first group of process tanks may be equal to the number of tanks in the second group or may be smaller or larger.

By automatically temporarily interrupting supply to the process tanks in the second group of process tanks, the operation of the plant can be dynamically adapted to the actual amount of waste water to be treated in dependency of the actual spare capacity, as the waste water is only supplied to the first group of process tanks based on the actual spare capacity. Consequently, the running cost can be reduced.

It should be understood, that by interruption of supply is understood, that supply of waste water is interrupted while the content is kept in the process tank(s) in question, i.e. the process tank(s) is(are) not emptied.

This method for treating waste water is in contradiction with traditional operating practice according to which continuously supply waste water to the process tanks and aeration hereof is required to ensure effective biological treatment. If supply is interrupted, the tanks are traditionally emptied, e.g. for cleaning purposes, during longer low load periods, and/or high temperature seasons.

The inventors have surprisingly found that in contradiction with traditional operating practice, supply can temporarily be interrupted to a second group of process tanks without emptying the tanks which leads to a significant reduction of cost of operation beyond what was expected.

The actual spare capacity may be determined based on the treatment rate of the sludge. Thus, the actual spare capacity may be determined based on at least one of actual performance of the sludge and the amount of biomass/micro-organisms. Other parameters may also be included, e.g. organic matter and/or nutrients.

The step of interrupting supply to the second group of process tanks is carried out automatically based on the actual spare capacity. A control system may receive a signal significant for the actual spare capacity, and thus control a valve or a plurality of valves to interrupt supply to the second group of process tanks.

Determination of the actual spare capacity may follow a predefined time schedule so that the actual spare capacity is determined e.g. every hour. Dependent on the size of the plant and/or the size of the sewer system supplying waste water to the plant, the actual spare capacity may however be determined more frequently or at larger time intervals, such as in intervals in the range of 0.5-6 hours.

The determination of the actual spare capacity may however change during the day, and/or the season, e.g. by dynamically changing the intervals for the determination e.g. based on recorded changes of the actual spare capacity.

Supply of the waste water to the second group of process tanks may e.g. be interrupted in up to 10 hours, up to 12-14 hours, up to a day, or even more days.

The step of interrupting supply to all the process tanks in the second group of process tanks may be carried out simultaneously. Alternatively, the step of interrupting supply to process tanks in the second group of process tanks may be carried out stepwise, e.g. by interrupting supply to the process tanks in the second group one by one, or in pairs comprising two or more process tanks. If the actual spare capacity is further increased, the number of process tanks in the second group is increased, so the number of process tanks in the first group is decreased and adapted to the actual spare capacity.

When the amount of waste water increases, supply of waste water may be resumed to at least one of the process tanks in the second group. The supply of waste water to at least one of the process tanks of the second group of tanks may thus be based on the actual spare capacity and may additionally be initiated based on a maximum interruption time. In the latter case, the process tanks in the second group may be exchanged so that waste water is supplied to a first group of process tanks based on the actual spare capacity. Resumption of supply to at least one of the process tanks in the second group of process tanks may be carried out automatically based on the actual spare capacity.

The step of resumption of supply to at least some of the process tanks in the second group of process tanks may be carried out simultaneously. Alternatively, the step of resumption may be carried out stepwise.

Thus, all process tanks may be back in normal operation with continuous inlet of waste water. When the actual spare capacity again increases, interruption of supply to a second group of process tanks will take place. The process tanks in the second group may be identical to the process tanks in the second group in the previous interruption period or may be different. As the number of process tanks in the second group varies with the actual spare capacity, interruption of supply to some process tanks may be more frequent than interruption of supply to other process tanks.

In order to ensure a sufficient amount of oxygen for the micro-organism for the biological comprises treatment of the waste water the plant comprises an aeration structure configured for comprises aeration of at least one of the process tanks. The method further comprises a step of interrupting aeration of at least one of the process tanks in the second group, whereby use of electricity can be reduced. The step of interrupting aeration may be performed substantially simultaneous with the step of interrupting supply to the process tanks of the second group of process tanks. Alternative the step of interruption of aeration may be carried out before or after the step of interruption of supply. The order of interruption may e.g. depend on the actual spare capacity, the actual size of the plant, and the plant configuration, such as the number of process tanks and how the tanks are connected.

As a positive side-effect of interrupting supply to at least one of the process tanks and of interruption the aeration, anaerobic conditions in the tanks in question will be created after a period of interruption. This may promote the growth of bio-P bacteria, which improves removal of bio-P and may further improve the settling properties of the sludge, which reduces the risk of sludge escape from the clarification tanks during high flow.

To improve conditions for the micro-organisms, aeration of at least one of the process tanks in the second group may be carried out periodically. This may further extend the time period in which supply to the process tank(s) in question is interrupted.

When the amount of waste water increases, it may be necessary to initiate supply to at least one of the process tanks of the second group again, as the actual spare capacity of the process tanks of the first group may be close or zero or may soon be close to zero. However, in order to prepare the micro-organisms for supply of waste water, aeration of the at least one process tank is initiated before supply of waste water to at least one of the process tanks of the second group of process tanks is initiated.

Aeration may be initiated based on different forms or forecast information, as described in more details below. The forecast information may be indicative for the actual spare capacity.

To improve the conditions for micro-organisms, the plant may further comprise a stirring structure configured for stirring of at least one of the process tanks. Thus, the method may further comprise a step of interrupting stirring in at least one of the process tanks in the second group of process tanks, whereby the running costs of the plant may be reduced further. The step of interrupting stirring may be performed substantially simultaneous with the step of interrupting supply to the process tanks of the second group of process tanks, and thus be based on the actual spare capacity. Alternative the step of interrupting stirring may be carried out before or after the step of interruption of supply.

The plant may further comprise a pumping structure configured for recirculation of at least a part of the treated water from at least one of the process tanks. I.e. treated water may be recirculated from one process tank to another process tank or from one process tank to the same process tank. Thus, the method may further comprise a step of interrupting recirculation from at least one of the process tanks in the second group of process tanks, whereby the running costs of the plant may be reduced further. The step of interrupting recirculation may be performed substantially simultaneous with the step of interrupting supply to the process tanks of the second group of process tanks, and thus be based on the actual spare capacity. Alternative the step of interrupting recirculation may be carried out before or after the step of interruption of supply.

As supply of waste water vary during day and night, e.g. may be higher during daytime than during nights, the actual spare capacity may additionally be determined based on a time schedule, so that the determination of the actual spare capacity includes predetermination based on time. The time schedule may however be divided into a more fine scale, such as an actual spare capacity being determined for each 8, 6, 4, or even every hour or every half hour.

In addition to the above, the method may comprise a step of determining a flow of waste water to the plant. Subsequently, the actual spare capacity may additionally be determined based on the determined flow. The flow may be determined directly in the inlet to the plant, or determined by measurements in the sewer system before or after the plant, or may alternatively be determined based on forecast information, or on measurement indicative for the flow.

In one embodiment, a control system may receive forecast information indicative for the flow, and subsequently the actual spare capacity may be determined including this forecast information. The forecast information may be selected from a group consisting of: information from one or more rain gauges, weather radar, weather forecasts, one or more flow measurements in a sewer system supplying waste water to the plant, and one or more signals from one or more pumping stations. Is should be understood, that additional parameters may also form part of the forecast information.

The number of parameters forming part of the forecast information may depend on the size of the plant, the size of the sewer system, the age of the plant and/or the sewer system, etc.

In order to optimise the treatment of waste water, measurements form part of the determination of the actual spare capacity. The method comprises a step of measuring a content of a substance/parameter characterising the process tanks, where the actual spare capacity is determined based on the content. The content is measured in the process tank(s)

When determining the actual spare capacity on the content of a substance/parameter characterising the process tanks, the substance/parameter is selected from a group consisting of: COD (Chemical Oxygen Demand), BOD (Biochemical Oxygen Demand), TOC (Total Organic Carbon),

O₂, N, NH₄-N, NH₄-N + NO₃-N, and OUR (Oxygen Uptake Rate).

To further reduce the running cost, the method may comprise a step of supplying treated water only to a first group of clarification tanks, and a step of interrupting supply to a second group of clarification tanks. The first group of clarifications tank is a subset of the plurality of clarification tanks, whereby a number, such as 1, 2, 3, ... 6, 7 or even more clarification tanks forming part of the second group of clarification tanks are not supplied with treated waste water from the process tank(s).

The step of supplying treated water only to a first group of clarification tanks, and the step of interrupting supply to a second group of clarification tanks may be based on the actual spare capacity.

The plant may comprise a sludge scraper structure configured for scraping of at least one of the clarification tanks. In one embodiment, the method may comprise a step of interrupting scraping in at least one of the clarification tanks in the second group of clarification tanks. The step of interrupting scraping may be based on the actual spare capacity. However, other aspects may also be used.

Furthermore, the plant may comprise a sludge pump configured for pumping sludge from at least one of the clarification tanks. In one embodiment, the method may comprise a step of interrupting pumping from at least one of the clarification tanks in the second group of clarification tanks. The step of interrupting pumping may be based on the actual spare capacity. However, other aspects may also be used.

The step of interrupting scraping and/or pumping may be performed substantially simultaneous with the step of interrupting supply to the at least one clarification tank of the second group of clarification tanks. Alternative the step of interruption of scraping and/or pumping may be carried out before or after the step of interruption of supply. The order of interruption may e.g. depend on the actual spare capacity, the size of the plant, and the size of the clarification tanks.

According to a second aspect, the invention provides an activated sludge plant for treatment of waste water according to claim 10.

The substance/parameter characterising the process tanks is one or more of: COD (Chemical Oxygen Demand), BOD (Biochemical Oxygen Demand), TOC (Total Organic Carbon), O₂, N, NH₄-N, NH₄-N + NO₃-N, and OUR (Oxygen Uptake Rate).

The control unit may be in data communication with valves and/or pumps and/or other flow controlling units to control supply and interruption of supply to the process tanks.

It should be understood, that a skilled person would readily recognise that any feature described in combination with the first aspect of the invention could also be combined with the second aspect of the invention, and vice versa.

The plant according to the second aspect of the invention is very suitable for performing the method steps according to the first aspect of the invention. The remarks set forth above in relation to the method are therefore equally applicable in relation to the plant.

### Brief description of the drawings

Embodiments of the invention will now be further described with reference to the drawings, in which:
Fig. 1 schematically illustrates an activated sludge plant,
Fig. 1a schematically illustrates an alternative embodiment of an activated sludge plant having an alternative layout of a process tank with two different states of operation,
Fig. 2 schematically illustrates an activated sludge plant comprising a plurality of process tanks and a plurality of clarification tanks,
Fig. 3 schematically illustrates an alternative embodiment of an activated sludge plant comprising a plurality of process tanks and a plurality of clarification tanks,
Fig. 4 schematically illustrates an activated sludge plant in which supply is interrupted to a second group of process tanks,
Fig. 5 schematically illustrates an alternative embodiment of an activated sludge plant in which supply is interrupted to a second group of process tanks, and
Fig. 6 schematically illustrates an activated sludge plant in which supply is interrupted to a second group of process tanks, and in which supply of treated water is interrupted to a second group of clarification tanks.

### Detailed description of the drawings

It should be understood that the detailed description and specific examples, while indicating embodiments of the invention, are given by way of illustration only, since various changes and modifications within the spirit and scope of the invention will become apparent to those skilled in the art from this detailed description.

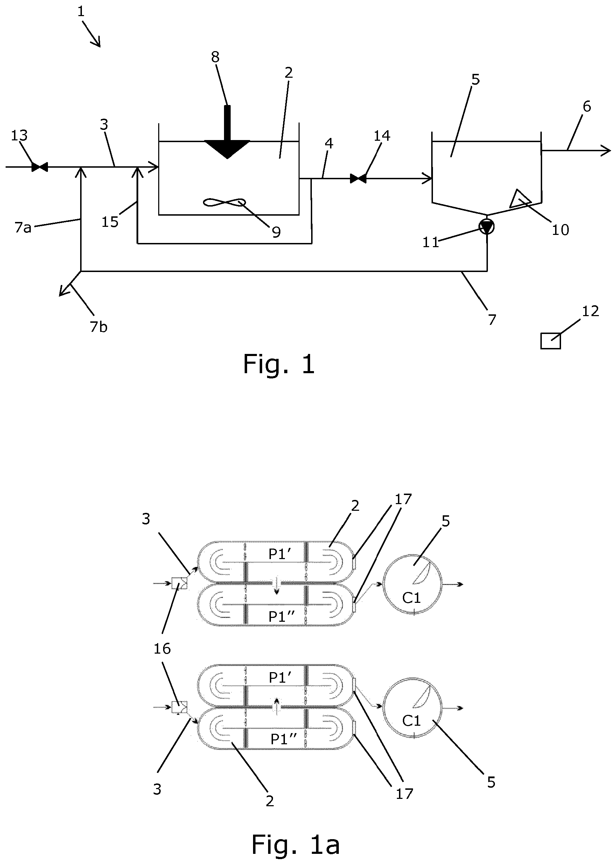

Fig. 1 schematically illustrates an activated sludge plant 1. The plant 1 comprises a plurality of process tanks 2 (of which only one is illustrated) comprising activated sludge with a treatment rate being variable (not shown). Each process tank 2 has an inlet 3 for receiving waste water and an outlet 4 for supplying treated water to at least one clarification tank 5 (only one is illustrated) for separation into a water fraction and a sludge fraction. The clarification tank 5 of the present embodiment comprises a first outlet 6 for water and a second outlet 7 for water comprising sludge.

One fraction of the water comprising sludge may be returned to the inlet 3 via the return inlet 7a whereas another fraction comprising excess sludge may be removed via the excess outlet 7b.

In the present embodiment, the plant 1 comprises an aeration structure 8 configured for aeration of at least one of the process tanks 2 to ensure a sufficient amount of oxygen for the micro-organism for the biological treatment of the waste water.

Furthermore, the illustrated plant 1 comprises a stirring structure 9 configured for stirring of at least one of the process tanks 2 to improve the conditions for micro-organisms.

The illustrated plant 1 comprises a sludge scraper structure 10 configured for scraping of at least one of the clarification tanks 5, and a sludge pump 11 configured for pumping sludge from at least one of the clarification tanks 2.

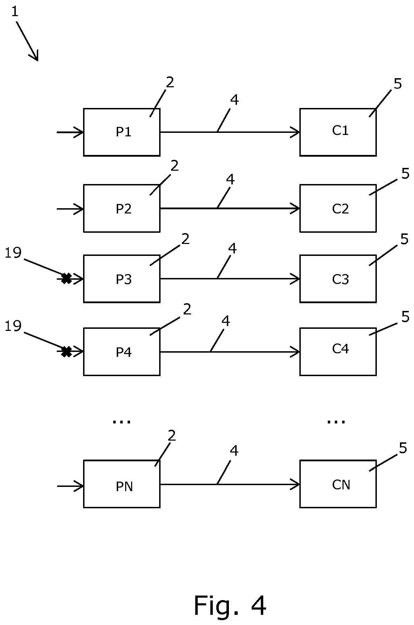

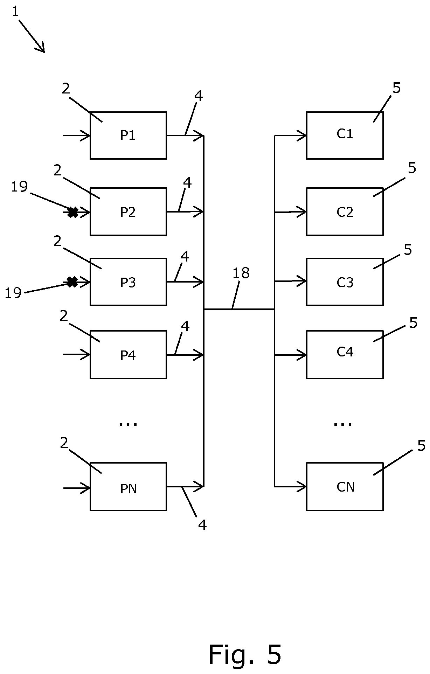

Treatment of waste water in the plant 1 comprises at least the steps of determining an actual spare capacity indicating an amount of waste water which can be added to and treated in the activated sludge plant 1, supplying waste water only to a first group (see Figs. 4 and 5) of process tanks 2, the first group of process tanks 2 being a subset of the plurality of process tanks, wherein the number of process tanks in the first group is determined based on the actual spare capacity, and automatically interrupting supply to a second group (see Figs. 4 and 5) of process tanks 2 based on the actual spare capacity.

Supply and interruption of supply to the first and second groups of process tanks may be controlled by a control unit 12 which it configured for communication with a number of valves 13, 14 configured to interrupt supply to at least one process tank 2 and at least one clarification tank 5, respectively, by closing said valve. Supply may be resumed by opening of the valve 13, 14 and may be controlled by the control unit 12.

The activated sludge plant 1 further comprises a pumping structure 15 configured for recirculation of at least a part of the treated water from at least one of the process tanks 2.

Fig. 1a illustrates part of an alternative embodiment of an activated sludge plant 1 in which the process tank 2 is divided into two parts - P1' and P1". The two parts are connected to allow alternating supply to the process tank parts P1' and P1". In the upper part of Fig. 1a, waste water is initially lead to process tank part P1', and from here waste water is subsequently lead to process tank part P1" for further treatment. After treatment in the process tanks 2, treated water is lead to the clarification tank 5 marked C1. In the lower part of Fig. 1a, waste water is initially lead to process tank part P1". Whether process tank part P1 or P2 is selected as the initial tank is controlled by the switching mechanism 16. To ensure that the treated water has passed both parts of the process tank 2 before being lead to the clarification tank C1, the weir 17 is opened and closed in dependency of the switching mechanism 16. The two states of operation are performed in a periodic automatic cycles over some hours.

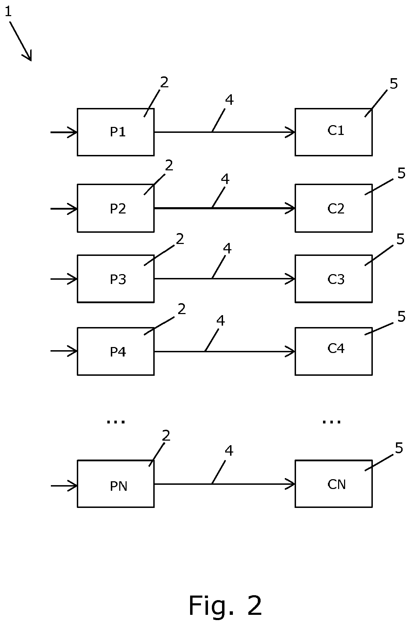

Fig. 2 schematically illustrates an activated sludge plant 1 comprising a plurality of process tanks 2 and a plurality of clarification tanks 5. In the present embodiment the number of process tanks 2 equals the number of clarification tanks 5. The process tanks 2 are numbered from P1 to PN, whereas the clarification tanks 5 are numbered from C1 to CN. Each process tank 2 has an outlet 4 for supplying treated water to a corresponding clarification tank 5.

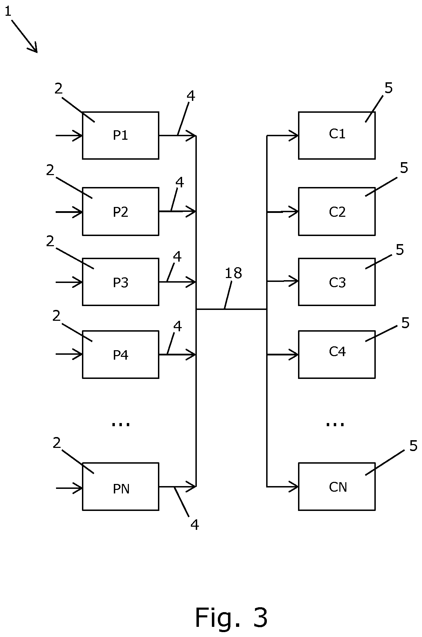

Fig. 3 schematically illustrates an alternative embodiment of an activated sludge plant 1 comprising a plurality of process tanks 2 and a plurality of clarification tanks 5. In the present embodiment the number of process tanks 2 equals the number of clarification tanks 5. The process tanks 2 are numbered from P1 to PN, whereas the clarification tanks 5 are numbered from C1 to CN. Each process tank 2 has an outlet 4 for supplying treated water to the clarification tanks 5 via a common fluid connection 18.

In the illustrated embodiment, the number of process tanks 2 equals the number of clarification tanks 5, i.e. a total of N of each type of tank. It should however be understood, that the number may be different, so that the plant 1 may e.g. comprises N process tanks and M clarification tanks.

Fig. 4 schematically illustrates an activated sludge plant 1 in which supply is interrupted to a second group of process tanks 2. The second group of process tanks comprises the process tanks numbered P3 and P4. The interruption is illustrated by the cross 19. Due to the direct connection between each process tank 2 and a corresponding clarification tank 5, supply to the corresponding clarification tanks C3 and C4 is also interrupted.

Fig. 5 schematically illustrates an activated sludge plant 1 in which supply is interrupted to a second group of process tanks 2. The second group of process tanks comprises the process tanks numbered P2 and P3. The interruption is illustrated by the cross 19.

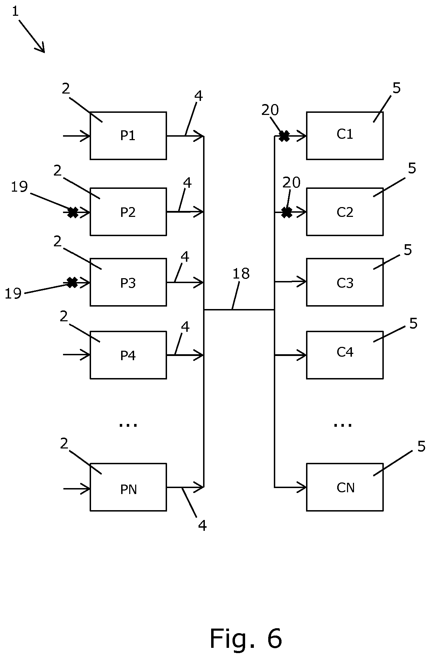

Fig. 6 schematically illustrates an activated sludge plant 1 in which supply of treated water is further interrupted to a second group of clarification tanks 5. Interruption of supply to the process tanks 2 numbered P2 and P3 is illustrated by the cross 19, whereas interruption of supply to the clarification tanks 5 numbered C1 and C2 is illustrated by the cross 20.

## Claims

1. A method for treatment of waste water in an activated sludge plant, the plant comprising a plurality of process tanks comprising activated sludge with a treatment rate being variable, each process tank having an inlet for receiving waste water and an outlet for supplying treated water to at least one clarification tank for separation into a water fraction and a sludge fraction, an aeration structure configured for aeration of at least one of the process tanks, and a control unit, the method comprising the steps of:
- measuring a content of a substance/parameter characterising the process tanks by measurements in the process tanks, the substance/parameter one or more of: COD (Chemical Oxygen Demand), BOD (Biochemical Oxygen Demand), TOC (Total Organic Carbon), O₂, N, NH₄-N, NH₄-N + NO₃-N, and OUR (Oxygen Uptake Rate) by use of at least one sensor configured to measure said content of said substance/parameter,
- determining an actual spare capacity indicating an amount of waste water which can be added to and treated in the activated sludge plant, wherein the actual spare capacity is determined based on the measured content of the substance/parameter characterising the process tanks, the actual spare capacity being determined by the control unit,
- supplying waste water only to a first group of process tanks, the first group of process tanks being a subset of the plurality of process tanks, wherein the number of process tanks in the first group is determined based on the actual spare capacity, the supply being controlled by the control unit, and
- automatically temporarily interrupting supply to a second group of process tanks based on the actual spare capacity without emptying the tanks, the supply being controlled by the control unit,
the method further comprising a step of interruption aeration to at least one of the process tanks in the second group, and a step of initiating aeration of the at least one process tank before supply of waste water to at least one of the process tanks of the second group of process tanks is initiated.

2. A method according to claim 1, wherein the actual spare capacity is determined based on the treatment rate of the sludge.

3. A method according to claim 1 or 2, wherein the step of interrupting supply to all process tanks in the second group of process tanks is carried out simultaneously.

4. A method according to any of the preceding claims, wherein aeration of at least one of the process tanks in the second group is carried out periodically.

5. A method according to any of the preceding claims, wherein the actual spare capacity is additionally determined based on a time schedule.

6. A method according to any of the preceding claims, further comprising a step of determining a flow of waste water to the plant, wherein the number of process tanks in the first group is additionally determined based on the flow.

7. A method according to any of the preceding claims, further comprising a step of receiving forecast information, wherein the number of process tanks in the first group is additionally determined based on the forecast information.

8. A method according to claim 7, wherein the forecast information is selected from a group consisting of: information from one or more rain gauges, weather radar, weather forecasts, one or more flow measurements in a sewer system supplying waste water to the plant, and one or more signals from one or more pumping stations.

9. A method according to any of the preceding claims, further comprising a step of supplying treated water only to a first group of clarification tanks, the first group of clarifications tank being a subset of the plurality of clarification tanks, and a step of interrupting supply to a second group of clarification tanks.

10. An activated sludge plant for treatment of waste water, the plant comprising:
- a plurality of process tanks comprising activated sludge;
- at least one sensor configured to measure in the process tanks a content of a substance/parameter characterising the process tanks, wherein the substance/parameter is one or more of: COD (Chemical Oxygen Demand), BOD (Biochemical Oxygen Demand), TOC (Total Organic Carbon), O₂, N, NH₄-N, NH₄-N + NO₃-N, and OUR (Oxygen Uptake Rate);
- at least one clarification tank for separation into a water fraction and a sludge fraction, each process tank having an inlet for receiving waste water and an outlet for supplying treated water to at least one clarification tank; and
- an aeration structure configured for aeration of at least one of the process tanks;
the plant further comprising a control unit configured for:
- determining an actual spare capacity indicating an amount of waste water which can be added to and treated in the activated sludge plant, the determination being based on measurements of the content of the substance/parameter characterising the process tanks,
- controlling a supply of waste water only to a first group of process tanks, the first group of process tanks being a subset of the plurality of process tanks, wherein the number of process tanks in the first group is determined based on the actual spare capacity,
- automatically controlling temporarily interruption of supply to a second group of process tanks based on the actual spare capacity without emptying the tanks, and
interrupting aeration to at least one of the process tanks in the second group, and initiating aeration of the at least one process tank before supply of waste water to at least one of the process tanks of the second group of process tanks is initiated.

## Patentansprüche

1. Verfahren zur Behandlung von Abwasser in einer Belebtschlammanlage, wobei die Anlage eine Vielzahl von Belebtschlamm aufweisenden Prozessbecken mit einer variablen Behandlungsrate umfasst, wobei jedes Prozessbecken einen Einlass zur Aufnahme von Abwasser und einen Auslass zur Zuführung von behandeltem Wasser an mindestens ein Klärbecken zur Trennung in eine Wasserfraktion und eine Schlammfraktion aufweist, eine Belüftungsstruktur, die für die Belüftung von mindestens einem der Prozessbecken konfiguriert ist, und eine Steuereinheit, wobei das Verfahren folgende Schritte umfasst:
- Messen eines Gehalts einer/eines die Prozessbecken kennzeichnenden Substanz/Parameters durch Messungen in den Prozessbecken, der Substanz/des Parameters von einem oder mehreren von: COD (Chemical Oxygen Demand, chemischer Sauerstoffbedarf), BOD (Biochemical Oxygen Demand, biochemischer Sauerstoffbedarf),TOC (Total Organic Carbon, gesamter organischer Kohlenstoff), O₂, N, NH₄-N, NH₄-N + NO₃-N und OUR (Oxygen Uptake Rate, Sauerstoffaufnahmerate) durch Anwendung von mindestens einem Sensor, der konfiguriert ist, um den Gehalt der Substanz/des Parameters zu messen,
- Bestimmen einer tatsächlichen Kapazitätsreserve, die eine Abwassermenge bezeichnet, die zur Belebtschlammanlage hinzugegeben und in ihr behandelt werden kann, wobei die tatsächliche Kapazitätsreserve auf der Basis des gemessenen Gehalts der Substanz/des Parameters bestimmt wird, der die Prozessbecken kennzeichnet, wobei die tatsächliche Kapazitätsreserve von der Steuereinheit bestimmt wird,
- Zuführen von Abwasser an eine erste Gruppe von Prozessbecken, wobei die erste Gruppe von Prozessbecken eine Untergruppe der Vielzahl von Prozessbecken ist, wobei die Anzahl von Prozessbecken in der ersten Gruppe auf der Basis der tatsächlichen Kapazitätsreserve bestimmt wird und die Zuführung von der Steuereinheit gesteuert wird, und
- automatisches, vorübergehendes Unterbrechen der Zuführung an eine zweite Gruppe von Prozessbecken auf der Basis der tatsächlichen Kapazitätsreserve ohne Leeren der Becken, wobei die Zuführung von der Steuereinheit gesteuert wird;
das Verfahren umfasst ferner einen Schritt der Unterbrechung der Belüftung für mindestens eins der Verfahrensbecken in der zweiten Gruppe und einen Schritt der Einleitung der Belüftung des mindestens einen Prozessbeckens, ehe die Zuführung von Abwasser an mindestens eines der Prozessbecken der zweiten Gruppe von Prozessbecken eingeleitet wird.

2. Verfahren nach Anspruch 1, wobei die tatsächliche Kapazitätsreserve auf der Basis der Behandlungsrate des Schlamms bestimmt wird.

3. Verfahren nach Anspruch 1 oder 2, wobei der Schritt des Unterbrechens der Zuführung an alle Prozessbecken in der zweiten Gruppe von Prozessbecken gleichzeitig ausgeführt wird.

4. Verfahren nach einem der vorstehenden Ansprüche, wobei Belüftung von mindestens einem der Prozessbecken in der zweiten Gruppe periodisch ausgeführt wird.

5. Verfahren nach einem der vorstehenden Ansprüche, wobei die tatsächliche Kapazitätsreserve zusätzlich auf der Basis eines Zeitplans bestimmt wird.

6. Verfahren nach einem der vorstehenden Ansprüche, ferner umfassend einen Schritt des Bestimmens eines Abwasserdurchflusses zur Anlage, wobei die Anzahl von Prozessbecken in der ersten Gruppe zusätzlich auf der Basis des Durchflusses bestimmt wird.

7. Verfahren nach einem der vorstehenden Ansprüche, ferner umfassend einen Schritt des Empfangens von Prognoseinformation, wobei die Anzahl von Prozessbecken in der ersten Gruppe zusätzlich auf der Basis der Prognoseinformation bestimmt wird.

8. Verfahren nach Anspruch 7, wobei die Prognoseinformation aus einer Gruppe ausgewählt wird, die aus Folgendem besteht: Information von einem oder mehreren Regenmessern, Wetterradar, Wettervorhersagen, einer oder mehreren Durchflussmessungen in einem Abwasserkanalsystem, das Abwasser der Anlage zuführt, und einem oder mehreren Signalen von einer oder mehreren Pumpstationen.

9. Verfahren nach einem der vorstehenden Ansprüche, ferner umfassend einen Schritt der Zuführung von behandeltem Wasser nur an eine Gruppe von Klärbecken, wobei die erste Gruppe von Klärbecken eine Untergruppe der Vielzahl von Klärbecken ist, und einen Schritt des Unterbrechens der Zuführung an eine zweite Gruppe von Klärbecken.

10. Belebtschlammanlage zur Behandlung von Abwasser, umfassend:
- eine Vielzahl von Prozessbecken, die Belebtschlamm aufweisen;
- mindestens einen Sensor, der konfiguriert ist, um in den Prozessbecken einen Gehalt einer Substanz /eines Parameters zu messen, die/der die Prozessbecken kennzeichnet, wobei die Substanz/der Parameter eins oder mehrere von Folgenden ist: COD (Chemical Oxygen Demand, chemischer Sauerstoffbedarf), BOD (Biochemical Oxygen Demand, biochemischer Sauerstoffbedarf),TOC (Total Organic Carbon, gesamter organischer Kohlenstoff), O₂, N, NH₄-N, NH₄-N + NO₃-N und OUR (Oxygen Uptake Rate, Sauerstoffaufnahmerate);
- mindestens ein Klärbecken für die Trennung in eine Wasserfraktion und eine Schlammfraktion, wobei jedes Prozessbecken einen Einlass zur Aufnahme von Abwasser und einen Auslass zum Zuführen von behandeltem Wasser an mindestens ein Klärbecken aufweist; und
- eine Belüftungsstruktur, die zum Belüften von mindestens einem der Prozessbecken konfiguriert ist;
die Anlage umfasst ferner eine Steuereinheit, die für Folgendes konfiguriert ist:
- Bestimmen einer tatsächlichen Kapazitätsreserve, die eine Abwassermenge bezeichnet, die zur Belebtschlammanlage hinzugegeben und in ihr behandelt werden kann, wobei die Bestimmung auf Messungen des Gehalts der Substanz/des Parameters basiert, die/der die Prozessbecken kennzeichnet,
- Steuern einer Zuführung von Abwasser nur an eine erste Gruppe von Prozessbecken, wobei die erste Gruppe von Prozessbecken eine Untergruppe der Vielzahl von Prozessbecken ist, wobei die Anzahl von Prozessbecken in der ersten Gruppe auf der Basis der tatsächlichen Kapazitätsreserve bestimmt wird,
- automatisches, vorübergehendes Unterbrechen der Zuführung an eine zweite Gruppe von Prozessbecken auf der Basis der tatsächlichen Kapazitätsreserve ohne Leeren der Becken, und
Unterbrechen der Belüftung für mindestens eins der Prozessbecken in der zweiten Gruppe und Einleiten von Belüftung des mindestens einen Prozessbeckens, ehe die Zuführung von Abwasser an mindestens eins der Prozessbecken der zweiten Gruppe von Prozessbecken eingeleitet wird.

## Revendications

1. Procédé de traitement des eaux usées dans une usine de boue activée, l'usine comprenant une pluralité de cuves de traitement comprenant de la boue activée avec un taux de traitement étant variable, chaque cuve de traitement ayant une entrée destinée à la réception des eaux usées et une sortie destinée à l'alimentation des eaux traitées vers au moins une cuve de clarification pour la séparation en une fraction aqueuse et une fraction de boue, une structure d'aération conçue pour l'aération d'au moins l'une des cuves de traitement, et une unité de commande, le procédé comprenant les étapes consistant à :
- mesurer une teneur d'une substance/d'un paramètre caractérisant les cuves de traitement au moyen de mesures dans les cuves de traitement, la substance/le paramètre étant l'un ou plusieurs parmi : la COD (demande chimique en oxygène), la BOD (demande biochimique en oxygène), le TOC (carbone organique total), O₂, N, NH₄-N, NH₄-N + NO₃-N et le OUR (taux d'absorption d'oxygène) par l'utilisation d'au moins un capteur conçu pour mesurer ladite teneur de ladite substance/dudit paramètre,
- déterminer une capacité de réserve réelle indiquant une quantité d'eaux usés qui peuvent être ajoutées à l'usine de boue activée et traitées dans celle-ci, dans lequel la capacité de réserve réelle est déterminée en fonction de la teneur mesurée de la substance/du paramètre caractérisant les cuves de traitement, la capacité de réserve réelle étant déterminée au moyen de l'unité de commande,
- alimenter les eaux usées uniquement vers un premier groupe de cuves de traitement, le premier groupe de cuves de traitement étant un sous-ensemble de la pluralité de cuves de traitement, dans lequel le nombre de cuves de traitement dans le premier groupe est déterminé en fonction de la capacité de réserve réelle, l'alimentation étant commandée au moyen d'unité de commande, et
- interrompre automatiquement et temporairement l'alimentation vers un deuxième groupe de cuves de traitement en fonction de la capacité de réserve réelle sans vider les cuves, l'alimentation étant commandée au moyen de l'unité de commande,
le procédé comprenant en outre une étape d'interruption de l'aération vers au moins une des cuves de traitement dans le deuxième groupe, et une étape de lancement de l'aération de l'au moins une cuve de traitement avant que l'alimentation des eaux usées vers au moins une des cuves de traitement du deuxième groupe de cuves de traitement ne débute.

2. Procédé selon la revendication 1, dans lequel la capacité de réserve actuelle est déterminée en fonction du taux de traitement de la boue.

3. Procédé selon la revendication 1 ou la revendication 2, dans lequel l'étape d'interruption de l'alimentation vers toutes les cuves de traitement dans le deuxième groupe de cuves de traitement est réalisée de manière simultanée.

4. Procédé selon l'une quelconque des revendications précédentes, dans lequel l'aération d'au moins une des cuves de traitement dans le deuxième groupe est réalisée de manière périodique.

5. Procédé selon l'une quelconque des revendications précédentes, dans lequel la capacité de réserve actuelle est en outre déterminée en fonction d'un calendrier.

6. Procédé selon l'une quelconque des revendications précédentes, comprenant en outre une étape de détermination d'un débit d'eaux usées vers l'usine, dans lequel le nombre de cuves de traitement dans le premier groupe est en outre déterminé en fonction du débit.

7. Procédé selon l'une quelconque des revendications précédentes, comprenant en outre une étape de réception d'informations de prévision, dans lequel le nombre de cuves de traitement dans le premier groupe est en outre déterminé en fonction des informations de prévision.

8. Procédé selon la revendication 7, dans lequel les informations de prédiction sont choisies dans un groupe constitué de : informations provenant d'un ou de plusieurs pluviomètres, d'un radar météorologique, de prédictions météorologiques, d'une ou de plusieurs mesures de débit dans un système d'égouts alimentant les eaux usées vers l'usine, et un ou plusieurs signaux provenant d'une de plusieurs stations de pompage.

9. Procédé selon l'une quelconque des revendications précédentes, comprenant en outre une étape d'alimentation des eaux traitées uniquement vers un premier groupe de cuves de clarification, le premier groupe de cuves de clarification étant un sous-ensemble de la pluralité de cuves de clarification, et une étape d'interruption de l'alimentation vers un deuxième groupe de cuves de clarification.

10. Usine de boue activée destinée au traitement des eaux usées, l'usine comprenant :
- une pluralité de cuves de traitement comprenant la boue activée ;
- au moins un capteur conçu pour mesurer dans les cuves de traitement d'une teneur d'une substance/d'un paramètre caractérisant les cuves de traitement, dans lequel la substance/le paramètre est un ou plusieurs parmi : la COD (demande chimique en oxygène), la BOD (demande biochimique en oxygène), le TOC (carbone organique total), O₂, N, NH₄-N, NH₄-N + NO₃-N et le OUR (taux d'absorption d'oxygène) ;
- au moins une cuve de clarification destinée à la séparation dans une fraction aqueuse est une fraction de goût, chaque cuve de traitement comportant une entrée destinée à la réception des usées et une sortie destinée à l'alimentation des eaux traitées vers au moins une cuve de clarification ; et
- une structure d'aération conçue pour l'aération d'au moins une des cuves de traitement ;
l'usine comprenant en outre une unité de commande conçue pour :
- déterminer une capacité de réserve actuelle indiquant une quantité d'eaux usées qui peuvent être ajoutées à l'usine de boue activée et traitées dans celle-ci, la détermination étant en fonction de mesure de la teneur de la substance/du paramètre caractérisant les de traitement,
- commander une alimentation en eaux usées uniquement vers un premier groupe de cuves de traitement, le premier groupe de cuves de traitement étant un sous-groupe de la pluralité de cuves de traitement, dans lequel le nombre de cuves de traitement dans le premier groupe est déterminé en fonction de la capacité de réserve réelle,
- interrompre automatiquement et temporairement l'alimentation vers un deuxième groupe de cuves de traitement en fonction de la capacité de réserve réelle sans vider les cuves, et
- interrompre l'aération vers au moins une des cuves de traitement dans le deuxième groupe, et lancer l'aération de l'au moins une cuve de traitement avant que l'alimentation des eaux usées vers au moins une des cuves de traitement du deuxième groupe de cuves de traitement ne débute.
